# EUROPEAN PATENT SPECIFICATION

(11) **EP 2 573 195 B1**
(45) Date of publication and mention of the grant of the patent: **22.10.2014**
(21) Application number: 11182552.7
(22) Date of filing: 23.09.2011
(51) Int. Cl.: C21D 9/32, C21D 9/36, C21D 9/38, F16C 33/14

(54) **Method for increasing the fatigue resistance of a steel roller bearing**
Verfahren zur Erhöhung der Ermüdungsbeständigkeit eines Stahlswälzlagers
Méthode pour augmenter la résistance à la fatigue d'un roulement à rouleaux

(43) Date of publication of application: 27.03.2013
(73) Proprietor: ZF Wind Power Antwerpen NV, 2550 Kontich (BE)
(72) Inventor: Luyckx, Johan, 3740 Bilzen (BE); Wouters, Geert, 2400 Mol (BE)
(74) Representative: Kerscher, Nicolas Josef

(56) References cited:
- EP-A2- 1 312 818
- GB-A- 2 242 484

## Description

### Technical field of the invention

The present invention relates to a method for increasing white etching cracks robustness of roller bearings. More particularly, the present invention relates to a method for increasing fatigue strength of a roller bearing, which is a predominantly steel mechanical part, for reducing the tendency to form what are called "white etching cracks" or "brittle flakes" in such roller bearing.

### Background of the invention

It is known that, when mechanical parts roll and slide over one another, certain wear and fatigue symptoms occur. A special form of such fatigue is known from certain ball bearings and roller bearings as are used in wind turbines for example to support the rotor shaft in the housing of the wind turbine in a rotating manner or for example in a planetary gear unit to support the planet wheels in relation to a planet carrier.

After having been loaded for example more than 2,500 hours or for example more than 10,000 hours, fatigue phenomena may be observed in such bearings whereby brittle flakes peel off the roller elements or the bearing surfaces of the bearing. The formation of such brittle flakes is always accompanied by the formation of smaller cracks and/or transformed areas under the surface of the bearing in question. These cracks and areas can be made visible by microscope, for example within the context of a fatigue research. A sample is hereby taken of the bearing which has been exposed to rolling and/or sliding load for quite some time, after which this sample is etched with appropriate chemical products, such that cracks and transformed areas can be clearly observed.

A characteristic of the fatigue occurring as a result of the rolling and/or sliding is that in the brittle flakes or in the vicinity of the brittle flakes, cracks, areas, bands and/or layers can be observed which colour white under the microscope. These characteristics are often indicated as white etching cracks, white etching area, white etching layer, white etching band, etc.

According to the present state of the art and science, the underlying mechanism for the formation of brittle flakes and white etching cracks as a result of a rolling and/or sliding load is not yet known. As long as this mechanism is not found, it will remain difficult to find an effective way to avoid or at least decrease formation of white etching cracks.

### Summary of the invention

Embodiments of the present invention provide a method for increasing white etching cracks robustness of a roller bearing. The method comprises forming a compound layer, also referred to as white layer on a bearing raceway surface of the roller bearing and/or a material zone at the bearing raceway surface which has a lower yield point or yield stress than the original material, or in other words, than the material of the bearing before the treatment. This is done by heating the roller bearing to a temperature of between 100°C and 200°C, for example between 120°C and 150°C or between 130°C and 140°C, and for a time period of between 5 minutes and 2 hours, for example a time period of between 15 minutes and 30 minutes, while bringing the bearing raceway surface in contact with a preservation oil or a gearbox oil with a water content of up to 500 ppm.

According to embodiments of the invention, only a white layer may be formed on the bearing raceway surface of the roller bearing or only a material zone which has a lower yield point or yield stress than the original material, or in other words, than the material of the bearing before the treatment, may be formed at the bearing raceway surface.

According to other embodiments, both a white layer on the bearing raceway surface of the roller bearing and a material zone at the bearing raceway surface which has a lower yield point or yield stress than the original material may be formed. In the latter case, the material zone with lower yield point or yield stress may be located between the white layer and the base material of the bearing.

According to embodiments of the invention, the method may be integrated in the heating process of a bearing during an assembly process of the roller bearing in an application, such as e.g. in a gearbox of a wind turbine.

According to other embodiments of the invention, the method may be performed after mounting the roller bearing in a particular application, such as e.g. in a gearbox of a wind turbine. According to such embodiments, the method may be performed before a first normal operation of the particular application or may be performed after a first normal operation of the particular application. According to still further embodiments of the invention, the method may be performed during normal operation and at normal working temperature of the application. With "during normal operation" is meant during functioning of the application as for which the application is intended.

### Brief description of the drawings

It has to be noted that same reference signs in the different figures refer to same, similar or analogous elements.
Fig. 1 illustrates white etching zones near a raceway surface of a WEC failed bearing.
Fig. 2 schematically illustrates a material sample comprising a white layer at the bearing raceway surface and a plastic deformed zone as a result of an impact load Pₘₐₓ with friction V.
Fig. 3 shows results of indentor load measurements for a standard bearing material without any treatment and for that bearing material which has been heat treated in air.
Fig. 4 shows results of indentor load measurements for a standard bearing material without any treatment and for that bearing material which has been heat treated while the bearing raceway surface was in contact with a preservation oil or a gearbox oil with a water content of up to 500 ppm.
Fig. 5 illustrates an example of the heating step in a method according to an embodiment of the invention with parameters of temperature and time.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B. Not all embodiments of the invention comprise all features of the invention. In the following description and claims, any of the claimed embodiments can be used in any combination.

The present invention provides a method for increasing white etching cracks robustness of a roller bearing. More particularly, the present invention provides a method for increasing fatigue strength of a roller bearing, which is a predominantly steel mechanical part, so as to reduce the tendency to form "white etching cracks" or "brittle flakes" in such roller bearing. The roller bearing may, for example, be a roller bearing for being used in a wind turbine or in a gearbox for a wind turbine.

With white etching crack robustness is meant the ability of the roller bearing material to withstand the formation of white etching cracks.

As already described above, when mechanical parts roll and slide over each other, certain wear and fatigue symptoms occur, such as the appearance of brittle flakes and white etching cracks, the latter also being referred to as WEC. For the ease of explanation, in the further description bearings who suffer from damage caused by WEC or fail because of the presence of WEC will be referred to as WEC failed bearings.

As also already described above, the underlying mechanism of WEC formation as a result of a rolling or sliding load is not yet known. Therefore, it is important to first determine what is causing the formation of WEC in the bearing material, so as to find a suitable method or treatment to prevent as much and as effective as possible WEC from being formed in the roller bearing material.

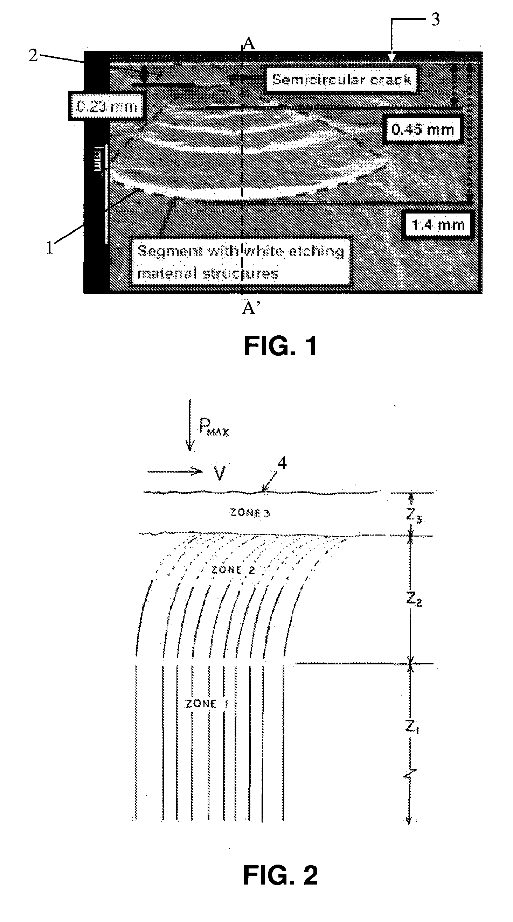

Fig. 1 shows a microscope image of part of a WEC failed bearing. This image shows the presence of white etching zones 1 and of semicircular crack surfaces 2. The white etching zones 1 are located near a raceway surface 3 of the bearing and can be oriented parallel to the raceway surface 3 or tilted with respect to the raceway surface 3. With raceway of the bearing is meant the functional surface of the bearing that contacts the roller elements of the bearing. Based on the orientation of the white etching zones 1 and the changed microstructure with nanocrystals, these white etching zones can be interpreted as an adiabatic shear band, as known by a person skilled in the art.

The image in Fig. 1 also shows the presence of semicircular crack surfaces 2 just below the raceway surface 3 of the bearing. Based on the global geometrical shape and the presence of heights (tops) and lows (cavities) at the crack surface, this semicircular crack surface 2 may be interpreted as a spallation crack surface generated by a wave load. A similar semi- or fully circular crack surface can be observed in combination with the presence of material inclusions just below the raceway surface 3. This observation is in accordance with the influence of material inclusions at a spallation crack surface noticed after an impact test.

Because of the presence of an adiabatic shear band and a spallation crack surface it has been concluded that WEC failure most probably results from impact loads working on the bearing material. Hence, a way to avoid or at least decrease WEC failure may be to increase the resistance against impact load. Hence, one possibility to make the bearings more robust against WEC failure may be by applying additional material treatments which increase resistance against impact load or, in other words, increase the allowed applicable impact load of the bearing material. From known theories related to impact load technology it can be derived that a material obtains a higher resistance towards impact load by providing a compound layer, by a person skilled in the art also referred to as a white layer at the surface and/or to provide a zone of plastic deformation in between the white layer and the original bearing material. This is schematically illustrated in Fig. 2 which shows a material sample comprising a white layer (zone 3, Z₃) at its surface 4 and a zone of plastic deformation (zone 2, Z₂) as a result of an impact load Pₘₐₓ with friction V between the white layer (zone 3, Z₃) and the original material (zone 1, Z₁). This white layer (zone 3, Z₃) and zone of plastic deformation (zone 2, Z₂) are formed by external impact loads and these structures remain to exist or restore when the white layer decreases because of wear.

Another possibility to increase allowable impact load of the bearing material is by decreasing its yield point or yield stress either only at the surface where impact loads are working or of the complete volume of the material.

Experiments were performed on how a white layer and/or a material zone at the bearing raceway surface which has a lower yield point or yield stress than the original material could be formed on bearings, for example suitable to be used in gearboxes for wind turbines, such as for example bearings for supporting shafts or planets in the gearbox.

First, formation of a white layer was studied. In a first experiment, a bearing material was hard machined, as known by a person skilled in the art. The result hereof was that, when examining the microstructure of the material, lamellar and smaller crystals could be seen near the surface which are the result of the hard machining of the bearing material. Accumulated plastic deformations which can be seen in this lamellar material structure correspond to zone Z₂ in Fig. 2.

In another experiment the bearing material was heated for a time period of 15 to 30 minutes at a temperature of between 130°C and 140°C in vacuum. This treatment did not cause a noticeable change in the microstructure. It caused generation of a few small (with about 20 nm diameter) neta carbides near the grain boundaries without changing the original microstructure with lamellar and smaller crystals near the raceway surface.

A further experiment constituted heating the bearing material for a time period of between 15 to 30 minutes at a temperature of between 130°C and 140°C in air and revealed a microstructure with an oxide layer having a thickness of between 10 and 15 nm.

During a still further experiment, the bearing material was heated for a time period of between 15 to 30 minutes at a temperature of between 130°C and 140°C in the presence of a chemical additive, which in the example given was a preservation oil and which was in contact with the bearing raceway surface. This revealed formation of a white layer with a thickness of between 100 and 150 nm at the bearing raceway surface.

Second, the yield point or yield stress of the above treated bearing materials was determined by means of indentor load measurements. During such measurements, deformation was measured as a function of the applied indentor load.

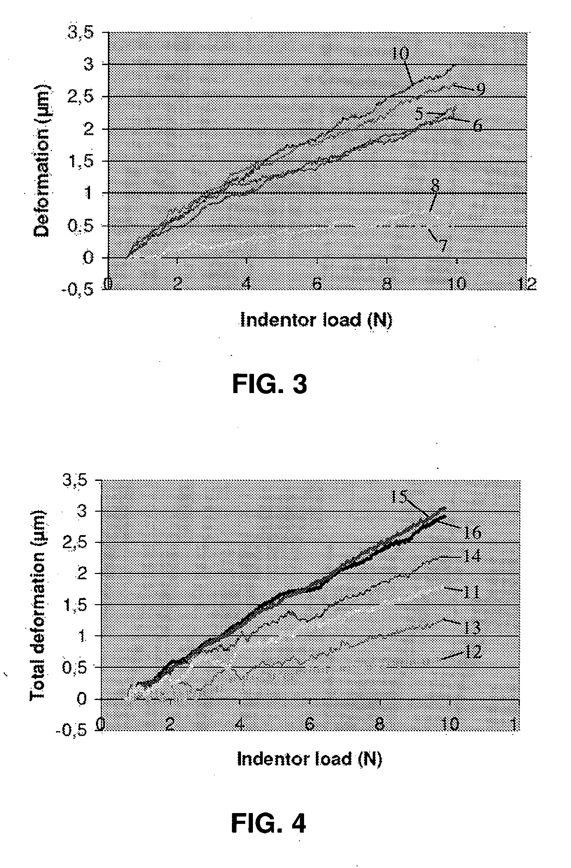

Fig. 3 illustrates the results from such measurements for the original bearing material without any treatment (curves 5, 7 and 9) and for the bearing material which has been heat treated in air as described above (curves 6, 8 and 10). Curves 5 and 6 show elastic deformation, curves 7 and 8 plastic deformation and curves 9 and 10 the total deformation. From Fig. 3 it can be seen that heating in air does not create any significant difference between the original bearing material and the heat treated bearing material.

Fig. 4 shows the results of indentor load measurements for the original bearing material without any treatment (curves 11, 13 and 15) and for the bearing material that was heat treated while the bearing raceway surface was in contact with a chemical additive, also as described above (curves 12, 14 and 16). Curves 11 and 12 show elastic deformation, curves 13 and 14 plastic deformation and curves 15 and 16 the total deformation. From Fig. 4 it can be seen that elastic deformations of the heat treated material (curve 12) are much lower than elastic deformations of the original bearing material (curve 11). The reduced elastic deformation is limiting the development of all types of material load mechanisms where load transfer is realised via elastic deformations. Furthermore, plastic deformation of the heat treated material (curve14) is significantly higher than plastic deformation of the original bearing material (curve 13). This means that a zone of plastic deformation is formed similar as zone Z2 in Fig. 2 and that the yield point or yield stress of the material in that zone is lowered.

As a result of the above study, the present invention provides a method for increasing white etching cracks robustness of a roller bearing. The method comprises forming a white layer on a bearing raceway surface of the roller bearing and/or a material zone at the bearing surface which has a lower yield point or yield stress than the original material. This is performed by heating the roller bearing to a temperature of between 100°C and 200°C for a time period of between 5 minutes and 2 hours while bringing the bearing raceway surface in contact with preservation oils or gearbox oils with a water content of up to 500 ppm.

The novel and inventive concept of the invention lies in the fact that the cause of WEC failure has been found and that a method is found for preventing or at least significantly reduce WEC formation in the bearing material. A further novel and inventive aspect lies in the combination of steps in the method according to embodiments of the invention, i.e. in the combination of the temperature at which the roller bearing is heated, the time period during which the roller bearing is heated and the presence of a preservation oil or a gearbox oil with a water content of up to 500 ppm. This combination leads to the formation of a white layer on the bearing raceway surface and/or a material zone at the bearing raceway surface which has a lower yield point or yield stress than the original material, or in other words, than the material of the bearing before the treatment. The presence of at least one of these phenomena provides a higher resistance to impact loads and thus will prevent or at least significantly reduce formation of WEC. Consequently, roller bearings which are treated with a method according to embodiments of the invention will have a longer lifetime and will show much less failures than currently used roller bearings.

According to embodiments of the invention, heating the roller bearing may be performed at a temperature of between 100°C and 200°C, for example between 120°C and 150°C or between 130°C and 140°C.

The influence of the heating temperature is illustrated in Table 1 below. The treatment temperatures mentioned in the table are all applied in the presence of a chemical additive as described above.

**Table 1 - Influence of temperature on WEC failure rate**

| **Temperature of material treatment** | **Gearbox population** | **WEC failure rate** | **After** |
|---|---|---|---|
| 100 °C | 400 | 40 % | 14 months |
| 110 °C | | 12% | |
| 110 - 120 °C | 41 | 73% | 15 months |
| 130 °C | 34 | 0% | 26 months |

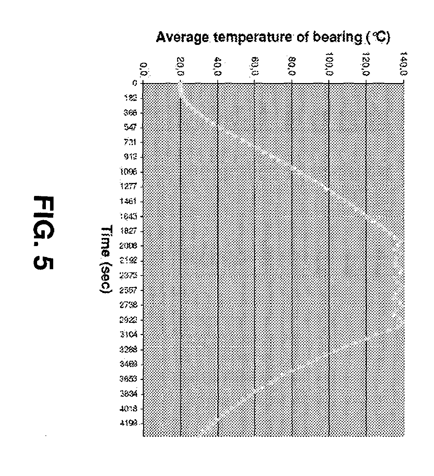

From Table 1 it can be seen that WEC failure rate can significantly be reduced when heating the roller bearing at a temperature of 100°C (40% failure rate), and even more significantly when heating the roller bearing at a temperature of 110°C (only 12% failure rate). Increasing the temperature to 120°C further reduces the failure rate to 7.3% and increasing the heating temperature to 130°C substantially prevents the occurrence of WEC. Heating the roller bearing may be performed during a time period of between 5 minutes and 2 hours, for example between 15 minutes and 30 minutes. Fig. 5 illustrates an example of a heating process according to an embodiment of the invention. In this example, the bearing material has been heated at a temperature of approximately 138°C for a time period of about 16 minutes. It has to be understood that this is only an exemplary process which not intended to limit the invention in any way.

The method may, according to embodiments of the invention, be integrated in the heating process during an assembly process of the roller bearing in an application, such as e.g. in a gearbox of a wind turbine. Hence, according to these embodiments, the roller bearing may be heated at a temperature of between 100°C and 200°C, for example between 120°C and 150°C or between 130°C and 140°C, during a time period of between 5 minutes and 2 hours, for example between 15 minutes and 30 minutes, in the presence of a preservation oil or a gearbox oil with a water content of up to 500 ppm while being assembled in the application.

According to other embodiments, however, the method may be performed after the roller bearing has been mounted in the particular application such as for example a gearbox of a wind turbine. According to these embodiments, the roller bearings are first mounted in the application and are then subsequently heated at a temperature of between 100°C and 200°C, for example between 120°C and 150°C or between 130°C and 140°C, during a time period of between 5 minutes and 2 hours, for example between 15 minutes and 30 minutes, in the presence of a preservation oil or a gearbox oil with a water content of up to 500 ppm. According to such embodiments, formation of the white layer on the bearing raceway surface and/or a material zone at the bearing raceway surface which has a lower yield point or yield stress than the original material may be obtained by making the application in which the roller bearing is mounted function during a short period of time at the required temperature as described above and in the presence of the preservation oil or gearbox oil with a water content up to 500 ppm. This treatment can be applied before the start of a first normal operation of the application or after the start of the first normal operation of the application. In the latter case, normal operation may be interrupted for performing the method according to embodiments of the invention. With normal operation is meant functioning of the application as for which it is intended.

According to still further embodiments of the invention, the method according to embodiments of the invention may be applied during normal operation of the application in which the roller bearing is mounted in the presence of a preservation oil or gearbox oil with a water content up to 500 ppm at normal working temperature of the application. With normal working temperature of the application is meant, in case of for example a gearbox of a wind turbine, a temperature of between 40°C and 80°C oil sump temperature. According to these embodiments, normal functioning of the application does not have to be interrupted for performing the method according to embodiments of the invention.

## Claims

1. Method for increasing fatigue strength of a steel roller bearing suitable to be used in a gearbox for a wind turbine, the roller bearing having a bearing raceway surface, **characterised in that** the method comprises forming a compound layer on the bearing raceway surface of the roller bearing and/or a material zone at the bearing raceway surface, wherein the material zone has a lower yield point or yield stress than the original material by heating the roller bearing to a temperature of between 100°C and 200°C for a time period of between 5 minutes and 2 hours while bringing the bearing raceway surface in contact with a preservation oil or a gearbox oil with a water content of up to 500 ppm.

2. Method according to claim 1, wherein heating the roller bearing is performed at a temperature of between 120°C and 150°C or between 130°C and 140°C.

3. Method according to claim 1 or 2, wherein heating the roller bearing is performed during a time period of between 15 minutes and 30 minutes.

4. Method according to any of the previous claims, wherein the method is integrated in a bearing assembly process of the roller bearing in an application.

5. Method according to any of claims 1 to 3, wherein the method is performed after assembly of the roller bearing in an application.

6. Method according to claim 5, wherein the method is performed before a first normal operation of the application.

7. Method according to claim 5, wherein the method is performed after a first normal operation of the application.

8. Method according to claim 5, wherein the method is performed during normal operation and at normal working temperature of the application.

9. Method according to any of claims 4 to 7, wherein the application is a wind turbine.

10. Method according to claim 9, wherein the application is a gearbox for a wind turbine.

## Patentansprüche

1. Verfahren zur Erhöhung der Ermüdungsbeständigkeit eines Stahlwälzlagers, das zur Benutzung in einem Getriebegehäuse für eine Windturbine geeignet ist, wobei das Wälzlager eine Lagerlaufringfläche aufweist, **dadurch gekennzeichnet, dass** das Verfahren das Ausbilden einer Verbundschicht auf der Lagerlaufringfläche des Wälzlagers und/oder eines Materialbereichs an der Lagerlaufringfläche umfasst, wobei der Materialbereich eine niedrigere Fließgrenze oder Fließspannung als das ursprüngliche Material aufweist, durch Erhitzen des Wälzlagers auf eine Temperatur zwischen 100°C und 200°C über einen Zeitraum zwischen 5 Minuten und 2 Stunden, während die Lagerlaufringfläche mit einem Konservierungsöl oder einem Getriebeöl mit einem Wassergehalt von bis zu 500 ppm in Berührung gebracht wird.

2. Verfahren nach Anspruch 1, wobei das Erhitzen des Wälzlagers bei einer Temperatur zwischen 120°C und 150°C oder zwischen 130°C und 140°C durchgeführt wird.

3. Verfahren nach einem der Ansprüche 1 oder 2, wobei das Erhitzen des Wälzlagers während eines Zeitraums zwischen 15 Minuten und 30 Minuten durchgeführt wird.

4. Verfahren nach einem der vorhergehenden Ansprüche, wobei das Verfahren in einen Lagermontageprozess des Wälzlagers in einer Anwendung eingegliedert ist.

5. Verfahren nach einem der Ansprüche 1 bis 3, wobei das Verfahren nach der Montage des Wälzlagers in einer Anwendung durchgeführt wird.

6. Verfahren nach Anspruch 5, wobei das Verfahren vor einem ersten Normalbetrieb der Anwendung durchgeführt wird.

7. Verfahren nach Anspruch 5, wobei das Verfahren nach einem ersten Normalbetrieb der Anwendung durchgeführt wird.

8. Verfahren nach Anspruch 5, wobei das Verfahren während Normalbetrieb und auf Normalbetriebstemperatur der Anwendung durchgeführt wird.

9. Verfahren nach einem der Ansprüche 4 bis 7, wobei die Anwendung eine Windturbine ist.

10. Verfahren nach Anspruch 9, wobei die Anwendung ein Getriebegehäuse für eine Windturbine ist.

## Revendications

1. Procédé pour augmenter la résistance à la fatigue d'un roulement à rouleaux en acier approprié pour être utilisé dans une boîte d'engrenages pour une turbine éolienne, le roulement à rouleaux présentant une surface de chemin de roulement, **caractérisé en ce que** le procédé comprend la formation d'une couche composite sur la surface de chemin de roulement du roulement à rouleaux et/ou une zone de matériau au niveau de la surface de chemin de roulement, la zone de matériau présentant une plus faible limite d'élasticité ou contrainte à la limite d'élasticité que le matériau d'origine, en chauffant le roulement à rouleaux jusqu'à une température d'entre 100 °C et 200 °C pendant un laps de temps d'entre 5 minutes et 2 heures tout en amenant la surface de chemin de roulement en contact avec une huile de conservation ou une huile de boîte d'engrenages présentant une teneur en eau de jusqu'à 500 ppm.

2. Procédé selon la revendication 1, dans lequel le chauffage du roulement à rouleaux est effectué à une température d'entre 120 °C et 150 °C ou d'entre 130 °C et 140 °C.

3. Procédé selon la revendication 1 ou 2, dans lequel le chauffage du roulement à rouleaux est effectué pendant un laps de temps d'entre 15 minutes et 30 minutes.

4. Procédé selon l'une quelconque des revendications précédentes, le procédé étant intégré à un processus d'assemblage de roulement du roulement à rouleaux dans une application.

5. Procédé selon l'une quelconque des revendications 1 à 3, le procédé étant mis en oeuvre après l'assemblage du roulement à rouleaux dans une application.

6. Procédé selon la revendication 5, le procédé étant mis en oeuvre avant un premier fonctionnement normal de l'application.

7. Procédé selon la revendication 5, le procédé étant mis en oeuvre après un premier fonctionnement normal de l'application.

8. Procédé selon la revendication 5, le procédé étant mis en oeuvre pendant le fonctionnement normal et à une température de travail normale de l'application.

9. Procédé selon l'une quelconque des revendications 4 à 7, l'application étant une turbine éolienne.

10. Procédé selon la revendication 9, l'application étant une boîte d'engrenages pour une turbine éolienne.
